Europäisches Patentamt

**European Patent Office**

**Office européen des brevets**

(19)

(11) Veröffentlichungsnummer: **0 059 887**
**B1**

(12) **EUROPÄISCHE PATENTSCHRIFT**

(45) Veröffentlichungstag der Patentschrift:
08.08.84

(21) Anmeldenummer: **82101433.9**

(22) Anmeldetag: **25.02.82**

(51) Int. Cl.³: **F 16 K 47/08**

(54) **Entspannungsventil.**

(30) Priorität: **04.03.81 DE 3108051**

(43) Veröffentlichungstag der Anmeldung:
**15.09.82 Patentblatt 82/37**

(45) Bekanntmachung des Hinweises auf die Patenterteilung:
**08.08.84 Patentblatt 84/32**

(84) Benannte Vertragsstaaten:
**AT FR GB IT NL SE**

(56) Entgegenhaltungen:
**GB - A - 2 054 103**
**US - A - 3 978 891**
**US - A - 4 050 479**
**US - A - 4 125 129**
**US - A - 4 221 037**

(73) Patentinhaber: **Gulde-Regelarmaturen GmbH & Co. KG, 63, Mannheimer Strasse, D-6700 Ludwigshafen (DE)**

(72) Erfinder: **Hubach, Helmut, Richard-Wagnerstrasse 1, D-6713 Freinsheim (DE)**

(74) Vertreter: **Klose, Hans, Dipl.-Phys., Kurfürstenstrasse 32, D-6700 Ludwigshafen (DE)**

## Beschreibung

Die Erfindung bezieht sich auf ein Entspannungsventil für Flüssigkeiten oder Gase mit in axialer Richtung übereinander angeordneten und mittels koaxialer Ringe beabstandeten Lochscheiben und Abdeckscheiben, wobei zwischen den Abdeckscheiben, durch die Lochscheiben verlaufende und im wesentlichen radial gerichtete Strömungskanäle vorhanden sind.

In der US-A-3 978 891 ist ein Entspannungsventil beschrieben, welches in einer Ausführungsform zwei ebene Abdeckscheiben aufweist, zwischen welchen drei Lochscheiben angeordnet sind. Diese Lochscheiben sind jeweils verschieden voneinander ausgebildet und in besonderer Weise gegeneinander ausgerichtet, damit in radialer Richtung Strömungswege sich ergeben. In einer weiteren Ausführungsform sind die erwähnten drei Lochscheiben zu einer einzigen Lochscheibe zusammengefaßt, wobei zu beiden Seiten jeweils koaxial angeordnete Ringe vorgesehen sind. Die Herstellung derartiger Lochscheiben mit integrierten koaxialen Ringen, ist mit einem recht erheblichen Aufwand verbunden. Dies gilt vor allem im Hinblick auf die Einbringung der genannten Löcher in die Lochscheibe. Ferner ergeben sich Schwierigkeiten im Hinblick auf eine schnelle Lieferfähigkeit und eine kostengünstige Lagerhaltung, da je nach Ventiltyp und/oder geforderter Entspannungscharakteristik die entsprechenden Lochscheiben angefertigt werden müssen.

Der Erfindung liegt daher die Aufgabe zugrunde, ein Entspannungsventil der eingangs genannten Art zu schaffen, dessen Scheiben bei einfacher und billiger Herstellung einen preisgünstigen Aufbau ermöglichen. Auch sollen die genannten Scheiben ohne besonderen Aufwand für Ventile unterschiedlicher Entspannungscharakteristik herstellbar sein und für den Aufbau kompakter Entspannungsventile geeignet sein. Ferner soll das Entspannungsventil für alle Anwendungsgebiete betriebssicher und den betrieblichen Gegebenheiten gewachsen sein.

Diese Aufgabe wird erfindungsgemäß dadurch gelöst, daß die Ringe mit den Abdeckscheiben jeweils einteilig ausgebildet sind, daß die Lochscheiben aus vorgefertigten Lochblechen bestehen, und daß die Lochscheiben und Abdeckscheiben mittels einer radial innen-liegenden Innenhülse geführt sind, welche radiale Kanäle aufweist, deren Durchmesser oder axiale Höhe im wesentlichen gleichgroß und/oder kleiner ist wie die Höhen eines der genannten Ringe und die Dicke der Lochscheibe zusammengenommen.

Das erfindungsgemäße Entspannungsventil zeichnet sich vor allem durch einen besonders einfachen und kostengünstigen Aufbau aus. Die Abdeckscheiben mit den Ringen können in einfacher Weise, insbesondere auf einer Drehbank, hergestellt werden. Die Herstellung der Lochscheiben aus vorgefertigten Lochblechen, welche als Halbprodukte im Handel erhältlich sind, ist in besonders einfacher und wirtschaftlicher Weise durchführbar. Hierbei sind keine aufwendigen Werkzeuge erforderlich, da aus dem in Bandform angelieferten Lochblechen lediglich die Lochscheiben mit den erforderlichen Innen- und Außendurchmessern, insbesondere durch Ausstanzen, hergestellt werden müssen. Es sei hervorgehoben, daß für Ventile unterschiedlicher Größe die Lochscheiben aus dem gleichen Lochblechband hergestellt werden können, so daß eine kostengünstige Lagerhaltung gegeben ist. Je nach Einsatzgebiet des Entspannungsventils kann unter Beibehaltung gleicher Abdeckscheiben durch geeignete Auswahl und Dimensionierung der Lochscheiben mit einem äußerst geringen Aufwand die erforderliche Entspannungscharakteristik erreicht werden. Andererseits bereitet es auch keinen besonderen Fertigungsaufwand, bei den Abdeckscheiben die Ringe in dem strömungstechnischen gewünschten Abstand anzuordnen. Mittels der mit radialen Kanälen versehenen Hülse wird in einfacher Weise die Führung und Arretierung von Lochscheiben und Abdeckscheiben erreicht, wobei in vorteilhafter Weise durch die angegebene Dimensionierung der Höhe bzw. des Durchmessers dieser Kanäle ein strömungstechnischer Kurzschluß der radial innenliegenden Löcher der Lochbleche unterbunden wird. Somit wird der vorhandene Einbauraum in optimaler Weise genutzt. Andererseits ist keine besondere und mit hohem Aufwand verbundene exakte Ausrichtung in radialer und/oder axialer Richtung von Lochblechen und Abdeckscheiben erforderlich, da immer sichergestellt ist, daß das Medium durch die radialen Kanäle zwischen den Abdeckscheiben in die Lochscheiben einströmen kann. Dies gilt zumindest im Hinblick auf die herstellungstechnisch ohne weiteres einhaltbaren Fertigungstoleranzen, wobei ohne weiteres sichergestellt werden kann, daß ein Kurzschluß der radial innenliegenden Löcher der Lochscheibe durch die in radialer Richtung verlaufenden Kanäle der genannten Hülse vermieden wird. Es sei an dieser Stelle ausdrücklich hervorgehoben, daß die Kanäle der Innenhülse zwar zweckmäßig als runde Bohrungen ausgeführt sind, gegebenenfalls aber auch andere Querschnitte aufweisen können, wobei die angegebene Dimensionierung entsprechend für die axiale Höhe gilt.

In einer bevorzugten Ausführungsform sind die Ringe von in axialer Richtung benachbarten Abdeckscheiben in radialer Richtung versetzt zu einander angeordnet. Es werden somit in einfacher Weise die genannten Strömungskanäle erzeugt, ohne daß hierfür eine besondere, exakte Ausrichtung von Lochscheiben und Abdeckscheiben erforderlich ist. Es sei darüber hinaus hervorgehoben, daß unter Ausnutzung der endlichen Federsteifigkeit der Lochscheiben eine besonders einfache und zuverlässige Verspannung von Lochscheiben und Abdeckscheiben erreicht wird.

Bevorzugt wird zwischen zwei in axialer Richtung benachbarten Abdeckscheiben jeweils nur eine einzige Lochscheibe angeordnet. Diese Lochscheibe wird den jeweiligen Anforderungen entsprechend ausgebildet sein, wobei vor allem der Durchmesser der Löcher, aber auch die Dikke der Lochscheibe vorgegeben wird. Eine aufwendige und die Herstellung nicht unerheblich verteuernde Ausrichtung dieser Lochscheibe zu anderen Bauteilen ist nicht erforderlich.

Um eine einfache und kostengünstige Herstellung der Lochscheiben zu ermöglichen, weisen die Löcher bevorzugt gleiche Durchmesser bzw. Abmessungen auf. Es sei hervorgehoben, daß die genannten Löcher der Lochscheiben grundsätzlich beliebige Querschnitte aufweisen können, doch es werden vorteilhaft im Querschnitt runde Löcher vorgesehen. Somit können die Lochscheiben kostengünstig aus gelochten Blechen, welche als Halbzeug im Handel erhältlich sind, insbesondere durch Ausstanzen hergestellt werden.

In einer bevorzugten Ausführungsform weisen die Löcher der Lochscheiben mit zunehmendem Abstand vor der Achse größere Durchmesser bzw. Abmessungen auf. Hierdurch wird in einfacher Weise entsprechend dem Druckabfall ein größerer Strömungsquerschnitt zur Verfügung gestellt.

Vorteilhaft sind Lochscheiben und Abdeckscheiben mittels einer radial innen liegenden Innenhülse geführt, welche radiale Kanäle aufweist. Ein derart ausgebildetes Entspannungsventil kann in einfacher Weise montiert werden, da Lochscheiben und Abdeckscheiben sowie die Innenhülse in einfacher Weise in das Ventil eingesetzt werden können.

Zweckmäßigerweise ist der Durchmesser der genannten radialen Kanäle der Innenhülse im wesentlichen gleich groß wie die Höhe der Ringe der Abdeckscheiben und die Dicke der Lochscheibe zusammengenommen. Es ist somit sichergestellt, daß die Flüssigkeiten oder Gase zwischen die Abdeckscheiben bzw. in die Lochscheiben einströmen können, ohne daß hierfür eine allzu exakte axiale Ausrichtung von Innenhülse einerseits und Lochscheiben und Abdeckscheiben andererseits angestrebt werden muß.

Bevorzugt werden die Ringe mit zunehmendem Abstand zur Achse mit entsprechend vergrößerten radialen Abständen zueinander angeordnet. Es wird somit dem Druckabfall entsprechend, wobei das Medium in radialer Richtung nach außen strömt, ein vergrößerter Strömungsquerschnitt geschaffen.

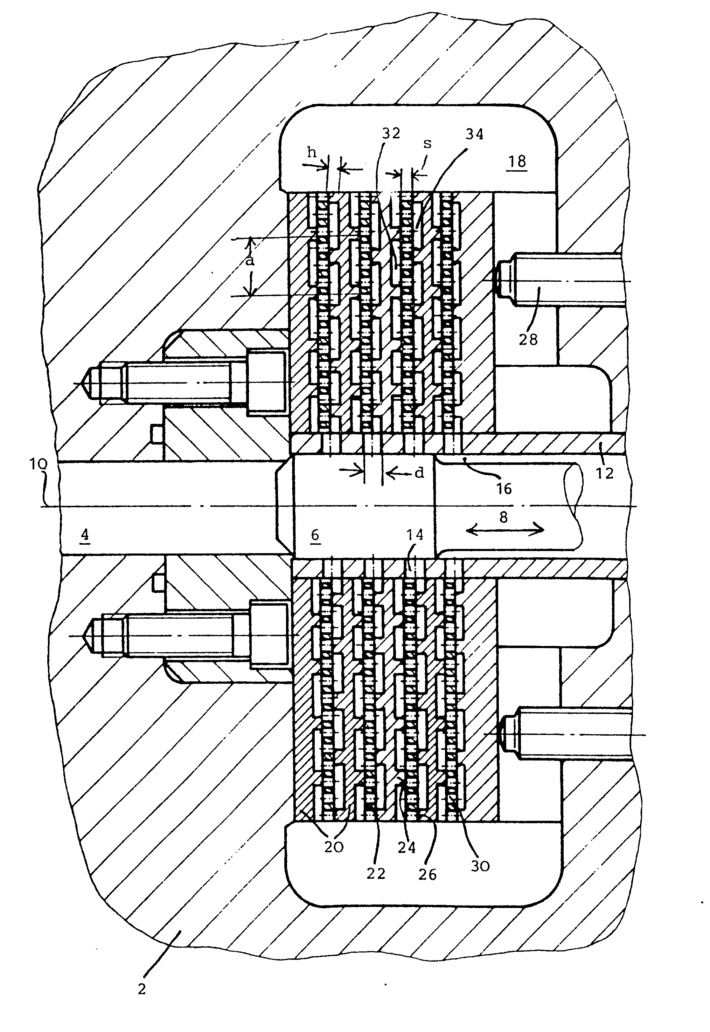

Aus dem nachfolgend anhand der Zeichnung erläuterten Ausführungsbeispiel ergeben sich weitere erfindungswesentliche Merkmale und Vorteile.

In der Zeichnung ist von einem Ventilgehäuse 2 eines Entspannungsventils nur ein Teil dargestellt. Durch die Zuführleitung 4 gelangt die Flüssigkeit oder das Gas ins Innere des Ventils, wobei mittels eines Absperrkörpers 6 der Durchfluß gesperrt oder auch freigegeben werden kann.

Hierzu kann der Absperrkörper 6 in gewohnter Weise in Richtung des Doppelpfeiles 8 in Richtung der Achse 10 hin und herbewegt werden. Gemäß Zeichnung befindet sich der Absperrkörper 6 in der Schließstellung. Der Absperrkörper befindet sich im Inneren einer zylindrischen Innenhülse 12, welche radial gerichtete Kanäle 14 aufweist. Wird der Absperrkörper 6 in der Zeichnung nach rechts zur Offenstellung hinbewegt, so kann das Gas oder die Flüssigkeit aus dem Ventilinnenraum 16 in radialer Richtung nach außen in den Ventilaußenraum 18 strömen, wie nachfolgend näher erläutert wird.

Die Innenhülse 12 ist von einer Anzahl Abdeckscheiben 20 umgeben, zwischen welchen jeweils eine Lochscheibe 22 angeordnet ist. Die Abdeckscheiben 20 weisen in radialer Richtung beabstandete Ringe 24 bzw. 26 auf. Bei dem dargestellten Ausführungsbeispiel sind drei mittlere Abdeckscheiben 20 vorgesehen, welche untereinander gleich ausgebildet sind. Hierbei sind die auf der einen Seite der Abdeckscheiben 20 angeordneten Ringe 24 bezüglich der auf der anderen Seite der Abdeckscheibe angeordneten Ringe 26 versetzt angeordnet. Die Ringe 24 bzw. 26 jeder Seite einer Abdeckscheibe weisen untereinander jeweils die gleiche Höhe h auf. Jeweils zwischen zwei derart ausgebildeten Abdeckscheiben ist eine Lochscheibe angeordnet, wobei die Ringe 24 bzw. 26 fest auf der zugeordneten Lochscheibe aufliegen.

Die genannten Lochscheiben 22 sind mit einer Anzahl von Löchern 30 versehen, welche bei dem dargestellten Ausführungsbeispiel jeweils den gleichen Durchmesser aufweisen. Es sei hervorgehoben, daß die Löcher auch unterschiedliche Durchmesser bzw. Abmessungen aufweisen können, wobei zweckmäßigerweise die in radialer Richtung außen liegenden Löcher größere Durchmesser bzw. Abmessungen aufweisen als die radial innen liegenden Löcher. Es ist ersichtlich, daß das durch die Kanäle 14 in die derart ausgebildete Drosselvorrichtung einströmende Gas bzw. die Flüssigkeit durch die derart gebildeten Strömungskanäle vom Innenraum 16 zum Außenraum 18 strömen kann. Hierbei erfolgt eine vielfache Richtungsänderung, da das Gas bzw. die Flüssigkeit aus den ringförmigen Zwischenräumen 32 einer Abdeckscheibe durch die Löcher 30 der zugeordneten Lochscheibe 22 hindurch in die Zwischenräume 34 der benachbarten Abdeckscheibe usw. gelangen kann, und schließlich in den Außenraum 18 strömt. Aufgrund der vielfachen Richtungsänderungen sowie der auftretenden Wandreibung in den derart ausgebildeten Strömungskanälen wird eine erhebliche Druckminderung bewirkt. Beim Durchströmen der in der genannten Weise ausgebildeten Drosselvorrichtung erfolgt die Entspannung der in der Zuführleitung 4 unter hohem Druck stehenden Flüssigkeiten bzw. des Gases auf einen niederen Druck im Ventilaußenraum 16. Der Durchfluß kann in bekannter Weise je nach Stellung des Absperrkörpers 6 vorgegeben werden.

Die Ringe 24, 26 weisen in radialer Richtung Abstände a auf. Strömt das Medium in radialer Richtung, so ist es von Vorteil, mit zunehmendem Abstand der Ringe 24, 26 zur Achse 10 auch die jeweiligen Abstände a zwischen den Ringen 24, 26 zu vergrößern.

## Bezugszeichenliste

| | |
|---|---|
| 2 | Ventilgehäuse, |
| 4 | Zuführleitung |
| 6 | Absperrkörper |
| 8 | Doppelpfeil |
| 10 | Achse |
| 12 | Innenhülse |
| 14 | Kanal |
| 16 | Ventilinnenraum |
| 18 | Ventilaußenraum |
| 20 | Abdeckscheibe |
| 22 | Lochscheibe |
| 24, 26 | Ringe |
| 28 | Schraube |
| 30 | Löcher |
| 32, 34 | Zwischenräume |
| a | Abstand zwischen den Ringen |
| d | Durchmesser der Kanäle 14 |
| h | Höhe der Ringe 24, 26 |
| s | Dicke der Lochscheibe |

## Patentansprüche

1. Entspannungsventil für Flüssigkeiten oder Gase mit in axialer Richtung übereinander angeordneten und mittels koaxialer Ringe beabstandeten Lochscheiben (22) und Abdeckscheiben (20), wobei zwischen den Abdeckscheiben (20), durch die Lochscheiben (22) verlaufende und im wesentlichen radial gerichtete Strömungskanäle vorhanden sind, dadurch gekennzeichnet, daß die Ringe (24, 26) mit den Abdeckscheiben (20) jeweils einteilig ausgebildet sind, daß die Lochscheiben (22) aus vorgefertigten Lochblechen bestehen und daß die Lochscheiben (22) und die Abdeckscheiben (20) mittels einer radial innen liegenden Hülse (12) geführt sind, welche Kanäle (14) aufweist, deren axiale Höhe oder Durchmesser (d) im wesentlichen gleichgroß und/oder kleiner als die Höhen (h) eines der genannten Ringe (24, 26) und die Dicke (s) der Lochscheibe (22) zusammengenommen.

2. Entspannungsventil nach Anspruch 1, dadurch gekennzeichnet, daß die Ringe (24 bzw. 26) von in axialer Richtung benachbarten Abdeckscheiben (20) in radialer Richtung versetzt zueinander angeordnet sind.

3. Entspannungsventil nach Anspruch 1 oder 2, dadurch gekennzeichnet, daß zwischen zwei in axialer Richtung benachbarten Abdeckscheiben (20) jeweils eine einzige Lochscheibe (22) angeordnet ist.

4. Entspannungsventil nach einem der Ansprüche 1 bis 3, dadurch gekennzeichnet, daß die Löcher einer Lochscheibe (20) gleiche Durchmesser bzw. Abmessungen aufweisen.

5. Entspannungsventil nach einem der Ansprüche 1 bis 3, dadurch gekennzeichnet, daß die Löcher (30) einer Lochscheibe mit zunehmendem Abstand von der Achse (10) größere Durchmesser bzw. Abmessungen aufweisen.

6. Entspannungsventil nach Anspruch 1 oder folgenden, dadurch gekennzeichnet, daß die Kanäle (14) der Hülse (12) radial gerichtet sind.

7. Entspannungsventil nach Anspruch 1 oder folgenden, dadurch gekennzeichnet, daß mit zunehmendem Abstand der Ringe (24, 26) zur Achse (10) die Abstände (a) zwischen den Ringen (24, 26) selbst größer werden.

## Claims

1. A relief valve for liquids or gases, having perforated plates (22) and cover plates (20), disposed above one another in an axial direction and spaced coaxially by means of rings, there being between the cover plates (20) flow ducts extending through the perforated plates (22) and directed essentially radially, characterized in that the rings (24, 26) are formed in each case as one part with the cover plates (20), in that the perforated plates (22) are made of prefabricated perforated metal sheets and in that the perforated plate (22) and the cover plate (20) are guided by means of a sleeve (12) which lies radially inwards and has ducts (14) whose axial height or diameter (d) is essentially equal to and/or less than the heights (h) of one of the said rings (24, 26) and the thickness (s) of the perforated plate (22) taken together.

2. A relief valve according to claim 1, characterized in that the rings (24 or 26) of cover plates (20), adjacent one another in an axial direction, are disposed such that they are offset with respect to one another in a radial direction.

3. A relief valve according to claim 1 or 2, characterized in that one single perforated plate (22) is disposed in each case between two cover plates (20), adjacent one another in the axial direction.

4. A relief valve according to one of claims 1 to 3, characterized in that the holes of one perforated plate (20) have the same diameter or dimensions.

5. A relief valve according to one of claims 1 to 3, characterized in that the holes (30) of one perforated plate have a larger diameter or larger dimensions as the distance increases from the axis (10).

6. A relief valve according to any one of claims 1 to 5, characterized in that the ducts (14) of the sleeve (12) are directed radially.

7. A relief valve according to any one of claims 1 to 6, characterized in that as the distance of the rings (24, 26) increases from the axis (10) the distances (a) between the rings (24, 26) themselves become greater.

## Revendications

1. Vanne de réduction de pression pour liquides ou gaz, pourvue de disques perforés (22) et de disques d'obturation (20) superposés dans le sens de l'axe de espacés au moyen d'anneaux coaxiaux, comprenant des canaux d'écoulement entre les disques d'obturation (20), qui passent à travers les disques perforés (22) et qui sont généralement disposés radialement, caractérisé en ce que les anneaux (24, 26) forment un tout avec les disques d'obturation (20), que les disques perforés (22) sont fabriqués à partir de tôles perforées préfabriquées, et que les disques perforés (22) et les disques d'obturation (20) sont guidés au moyen d'un tube (12), situé à l'intérieur et disposé d'une façon radiale, comprenant des canaux (14) dont la hauteur axiale ou le diamètre (d) sont en général égaux et/ou inférieurs à la hauteur (h) d'un desdits anneaux (24, 26) et à l'épaisseur (s) du disque perforé (22), le tout pris ensemble.

2. Vanne de réduction de pression selon la revendication 1, caractérisé en ce que les anneaux (24, 26) sont décalés l'un part rapport à l'autre dans le sens radial et ceci par rapport aux disques d'obturation (20) avoisinants, se trouvant dans le sens de l'axe.

3. Vanne de réduction de pression selon la revendication 1 ou 2, caractérisé en ce qu'entre deux disques d'obturation (20) avoisinants et dans le sens de l'axe, ne se trouve qu'un seul disque perforé (22).

4. Vanne de réduction de pression selon l'une des revendications 1 à 3, caractérisé en ce que les trous d'un disque perforé (20) ont les mêmes diamètres et dimensions.

5. Vanne de réduction de pression selon l'une des revendications 1 à 3, caractérisée en ce que les trous (30) d'un disque perforé augmentent en diamètre et dimensions en fonction de l'augmentation de la distance par rapport à l'axe (10).

6. Vanne de réduction de pression selon la revendication 1 ou les revendications suivantes, caractérisée en ce que les canaux (14) du tube (12) sont dirigés radialement.

7. Vanne de réduction de pression selon la revendication 1 ou les revendications suivantes, caractérisée en ce que les expaces (a) entre les anneaux (24, 26) augmentent simultanément et en fonction de l'espace entre les anneaux (24, 26) et l'axe (10).